# EUROPÄISCHE PATENTSCHRIFT

(11) **EP 1 875 091 B1**
(45) Veröffentlichungstag und Bekanntmachung des Hinweises auf die Patenterteilung: **19.08.2009**
(21) Anmeldenummer: 06753449.5
(22) Anmeldetag: 28.04.2006
(51) Int. Cl.: F16C 27/06, F16C 33/20

(54) **ANTIFRIKTIONS-VERBUNDSYSTEM UND LAGERTEIL MIT DIESEM SYSTEM**
ANTIFRICTION COMPOSITE SYSTEM AND BEARING ELEMENT WITH SAID SYSTEM
SYSTEME COMPOSITE ANTIFRICTION ET PIECE DE PALIER POURVUE DE CE SYSTEME

(30) Priorität: 29.04.2005 DE 202005006868 U
(43) Veröffentlichungstag der Anmeldung: 09.01.2008
(73) Patentinhaber: Hühoco Metalloberflächenveredelung GmbH, 42279 Wuppertal (DE)
(72) Erfinder: WELSCH, Klaus, 58339 Breckerfeld (DE)
(74) Vertreter: Patentanwälte Dr. Solf & Zapf
(86) Internationale Anmeldenummer: PCT/EP2006/004009
(87) Internationale Veröffentlichungsnummer: WO 2006/117155

(56) Entgegenhaltungen:
- EP-A- 0 978 528
- WO-A-01/55607
- FR-A- 2 477 065
- GB-A- 541 252
- US-A- 4 115 614

## Beschreibung

Die vorliegende Erfindung betrifft ein Antifriktions-Verbundsystem für ein Lagerteil gemäß dem Oberbegriff des Anspruchs 1. Des Weiteren betrifft die vorliegende Erfindung ein Lagerteil mit einem derartigen Antifriktions-Verbundsystem. Gattungsgemäße Verbundsysteme sind z.B. aus GB 541252 und WO 01/55607 bekannt.

Ein weiteres Verbundsystem ist aus der DE 10 2004 020 385 A1 bekannt. Dort wird ein Verfahren zur Herstellung von Gleitlagerbuchsen beschrieben, die einen außen mit einer Korrosionsschutzschicht versehenen Metallmantel als Träger und eine Gleitschicht aus Kunststoff aufweisen, wobei zur Ausbildung der Korrosionsschutzschicht ein Korrosionsschutzmittel in Pulverform mechanisch aufgetragen wird.

Unter anderem werden dabei zur Herstellung der Buchsen nach dem anmeldungsgemäßen Verfahren Werkstoff-Systeme eingesetzt, die unter dem Namen NOR-GLIDE® bekannt sind. Dabei handelt es sich um Materialverbünde aus insbesondere compoundierten PTFE-Folien auf einem Metallträger, z. B. in Form eines Metallgewebes, eines beispielsweise bronzebasierenden Streckmetalls oder eines Massivstahlrückens, z. B. eines Kaltbandes. Die bekannten Systeme sollen bei ihrem Einsatz zur Fertigung von Lagerelementen - bei zum Teil geforderter spanender Bearbeitbarkeit - eine hohe Belastbarkeit, insbesondere Druckaufnahme, geringe Reibungszahlen im tribologischen System, Verschleißfestigkeit sowie lange Lebensdauer und Wartungsfreiheit - auch unter Einwirkung von Staub und/oder Feuchtigkeit - gewährleisten.

Das Anforderungsprofil an Lagerelemente, wie sie beispielsweise als Hülsen, Schalen und Buchsen in der Möbelindustrie, im Maschinenbau und im Automobilbau eingesetzt werden, ist teilweise unterschiedlich. Im Automobilbau ist beispielsweise für die Volkswagen AG die Konzernnorm TL 257 (Dezember 2002) verbindlich, die sich auf "PTFE-Verbundfolie mit Metall" bezieht und in der ebenfalls Verbundsysteme der eingangs genannten Art - einschließlich der an sie gestellten Forderungen, wie Zug-, Druck- und Biegebelastbarkeit - beschrieben werden.

Durch das Vorhandensein von bestimmten Füllstoffen, wie z. B. Graphit, in einem Antifriktions-Verbundsystem ist es auch möglich, die elektrische Leitfähigkeit von Lagerelementen zu steuern, wobei diese Leitfähigkeit neben der Art des Füllstoffs von der Beschaffenheit und Größe einer Berührungsfläche zwischen Lager und Welle, der Materialdicke und von der wirksamen Flächenpressung bestimmt wird. Die erhöhte Leitfähigkeit dient dabei insbesondere der Prävention im Hinblick auf das mögliche Entstehen unerwünschter elektrischer Aufladungen der Bauteile.

Weitere Anforderungen an Verbundsysteme der eingangs genannten Art können sich daraus ergeben, dass für einige Anwendungsfälle mechanische Beständigkeit bei Wechselbeanspruchung, Stoßabsorption oder eine Schallentkopplung, insbesondere zur Verhinderung des Auftretens von Störschall, notwendig oder wünschenswert sind.

Die bekannten Antifriktions-Verbundsysteme weisen dabei eine Reihe von Nachteilen auf, wie einen aufwändigen Herstellungsprozeß, der sich durch den Einsatz stark kostenintensiver Werkstoffe - z. B. dickwandiger PTFE-Folien - oder aus der Notwendigkeit chemischer, galvanischer oder - wie im Falle der DE 10 2004 020 385 A1 - mechanischer, zum Teil stark zeitintensiver Behandlungsvorgänge ergibt. Einen besonderen Schwachpunkt stellt dabei unter anderem auch eine ungenügende, insbesondere thermische, Beständigkeit des Klebers dar, mit dessen Hilfe die funktionell wirkende Beschichtung auf den Träger laminiert wird.

Der vorliegenden Erfindung liegt die Aufgabe zugrunde, ein Antifriktions-Verbundsystem der eingangs genannten Art und ein Lagerteil zu schaffen, die sich durch eine einfache und kostengünstige Herstellungsweise auszeichnen und die vorstehend genannten Anforderungen, insbesondere im Hinblick auf Wechsel- und Stoßfestigkeit sowie Schalldämpfung besser erfüllen.

Diese Aufgabe wird für das Antifriktions-Verbundsystem der eingangs genannten Art durch die Merkmale des Kennzeichens des Anspruchs 1 gelöst. Das erfindungsgemäße Lagerteil ist mit dem erfindungsgemäßen Antifriktions-Verbundsystem ausgestattet.

Durch die Erfindung ergibt sich eine Vielzahl von fertigungs- und anwendungstechnischen Vorteilen.

So kann durch die in hohem Maße frei bestimmbaren Eigenschaften des Elastomers, wie beispielsweise dessen Shore-Härte, ein erwünschtes Federungsverhalten bei Stoßbeanspruchung gezielt eingestellt werden.

Durch die Ausbildung eines stoffschlüssigen Verbunds der Elastomerschicht mit dem metallischen Träger - ggf. unter Zwischenordnung einer Haftvermittlungsschicht - und der reibungsmindernd wirkenden Deckschicht kann auf den Einsatz eines üblichen Klebers verzichtet und damit auch die thermische Beständigkeit des gesamten erfindungsgemäßen Verbundsystems erhöht werden.

Ebenso kann die Beschaffenheit von Kanten eines Lagerteils, wie einer Gleitlagerbuchse, die aus dem erfindungsgemäßen Antifriktions-Verbundsystem hergestellt ist, verbessert werden - insbesondere dahingehend, dass ein effizienterer Schutz gegen eine Unterwanderung der Deckschicht durch delaminierend wirkende Stoffe erzielt wird.

Neben einer verbesserten Schallentkopplung kann mit der Erfindung bedarfsweise auch eine gewünschte, in variablem Maß erhöhte elektrische Leitfähigkeit oder eine Farbgestaltung eingestellt werden.

Durch eine im µm-Bereich mögliche Variation aller auf dem Träger befindlichen Schichten, wobei die Deckschicht insbesondere eine einen Kunststoff oder ein Kunststoff-Compound enthaltende Schicht sein kann, welche als einen Hauptbestandteil ein insbesondere fluorhaltiges Polymer, wie PTFE, umfaßt, kann zur Einstellung von exakten Paßmaßen auf eine mechanische Bearbeitung verzichtet werden.

Schließlich ist es vorteilhafterweise möglich, ein erfindungsgemäßes Antifriktions-Verbundsystem durch eine Fertigung im Coil-Coating-Verfahren, d. h. in einem kontinuierlichen und daher vergleichsweise wenig aufwändigen Prozeß, herzustellen, weil durch die erfindungsgemäße Schichtstrukturierung - sowohl in Fertigungszwischenschritten, als auch im Endzustand - eine beschädigungsfreie Auf- und Abrollbarkeit zu bzw. von einer Rolle gewährleistet werden kann.

Weitere vorteilhafte Ausführungen der Erfindung sind in den Unteransprüchen und der nachfolgenden speziellen Beschreibung enthalten. Anhand der in den beiliegenden Zeichnungsfiguren dargestellten Ausführungsbeispiele wird die Erfindung näher erläutert. Es zeigen:
- Fig. 1: ein erfindungsgemäßes Antifriktions-Verbundsystem im Querschnitt,
- Fig. 2: ein Lagerteil mit einem erfindungsgemäßen Antifriktions-Verbundsystem, teilweise geschnitten,
- Fig. 3: schematisiert, ein weiteres erfindungsgemäßes Antifriktions-Verbundsystem im Querschnitt.

In den verschiedenen Figuren der Zeichnung sind gleiche Teile in der Regel stets mit denselben Bezugszeichen versehen, so dass sie auch jeweils nur einmal beschrieben werden.

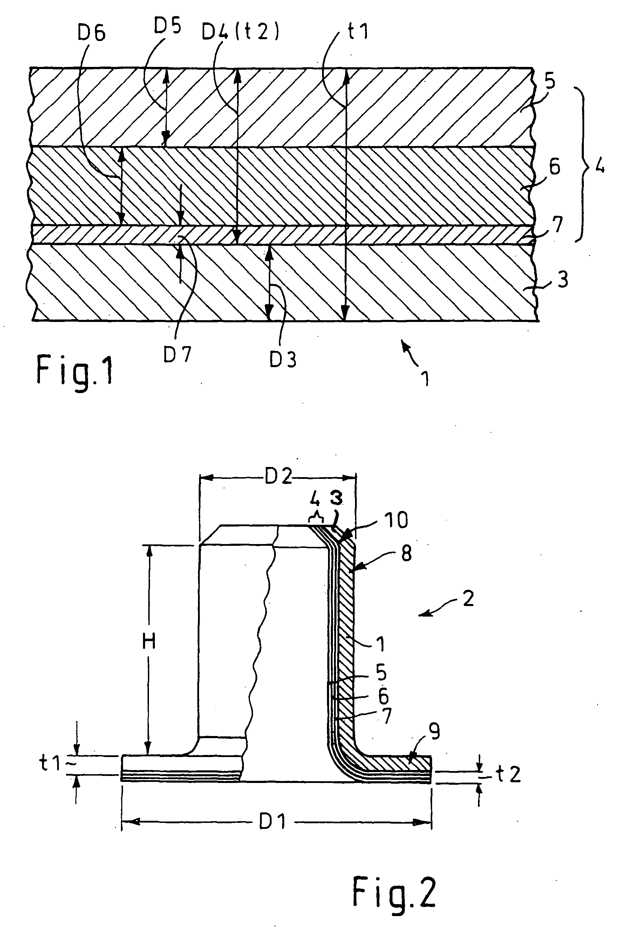

Wie zunächst Fig. 1 zeigt, weist ein erfindungsgemäßes Antifriktions-Verbundsystem 1 für ein Lagerteil 2, wie es exemplarisch als Gleitlagerbuchse in Fig. 2 dargestellt ist, einen metallischen Träger 3 und eine funktionelle Beschichtung 4 auf, die eine reibungsmindernd wirkende Deckschicht 5 umfaßt. Die funktionelle Beschichtung 4 umfaßt dabei außerdem erfindungsgemäß eine unmittelbar unter der Deckschicht 5 liegende Elastomerschicht 6.

Die Palette der zur Bildung dieser Elastomerschicht 6 einsetzbaren Werkstoffe ist weit gefächert und reicht beispielsweise von NBR-Beschichtungen über EPDM- und HNBRbis zu FPM-Ausführungen. Auch Naturkautschuk kann verwendet werden.

Die, insbesondere mit glatter Oberfläche ausgebildete, Elastomerschicht 6 kann mit Vorteil eine mittlere Dicke D6 im Bereich von 5 µm bis 120 µm, insbesondere im Bereich von 25 µm bis 50 µm, aufweisen.

Wie des Weiteren Fig. 1 zeigt, ist bei der dargestellten bevorzugten Ausführung des erfindungsgemäßen Antifriktions-Verbundsystem 1 vorgesehen, dass die Elastomerschicht 6 über eine - auch als Primer bezeichnete - Haftvermittlungsschicht 7 an den Träger 3 angebunden ist. Die Haftvermittlungsschicht 7 kann bevorzugt eine mittlere Dicke D7 im Bereich von 0,5 µm bis 5,0 µm, insbesondere im Bereich von 1,0 µm bis 2,0 µm, aufweisen und gewährleistet den erforderlichen adhäsiven Verbund zwischen dem metallischen Träger 3 und dem Elastomer.

Die funktionelle Beschichtung 4 ist somit aus der reibungsmindernd wirkenden Deckschicht 5, der Elastomerschicht 6 und der Haftvermittlungsschicht 7 gebildet und kann, in erster Linie mit dem Ziel der Vorbeugung gegen elektrostatische Bauteilaufladung, als Ganzes oder in Einzelschichten elektrisch leitfähig ausgeführt sein.

Die reibungsmindernd wirkende Deckschicht 5 kann dabei bevorzugt eine einen Kunststoff oder ein Kunststoff-Compound enthaltende Schicht sein, die als einen Hauptbestandteil ein insbesondere fluorhaltiges Polymer, wie PTFE, umfaßt, wobei es sich bei der reibungsmindernd wirkenden Deckschicht 5 in erfindungsgemäßer Weise um eine Filmschicht aus Lack handelt.

Die reibungsmindernd wirkende, wie die Elastomerschicht 6 insbesondere mit gleichmäßiger Dicke ausgebildete, Deckschicht 5 kann mit Vorteil eine mittlere Dicke D5 im Bereich von 2 µm bis 220 µm, insbesondere im Bereich von 30 µm bis 90 µm, aufweisen.

Der metallische Träger 3 kann in bevorzugter Ausführung in Bandform vorliegen und insbesondere aus kaltgewalztem Bandstahl, vorzugsweise in den Qualitäten DC 01 bis DC 04 nach DIN EN 10 139, aus Fein- oder Feinstblech oder aus einem Edelstahl-, Aluminium- oder Buntmetallband bestehen. Auch entsprechende Legierungen, wie Messing, können dabei Verwendung finden. So ist es in technologisch äußerst vorteilhafter Weise möglich, das erfindungsgemäße Antifriktions-Verbundsystem 1 durch eine Fertigung im Coil-Coating-Verfahren, d. h. in einem kontinuierlichen Prozeß von Rolle zu Rolle, zu fertigen. Das Band mit dem metallischen Träger 3 kann dabei von einer Rolle ("Coil") abgewickelt, flach durch eine Beschichtungsanlage laufend beschichtet und anschließend wieder zu einer Rolle aufgewickelt werden. Bei einer beidseitigen Beschichtung, ist - in einer Verfahrensstufe der Auftragung der Deckschicht 5 als Filmschicht aus Lack - eine ober- und unterseitige Beschichtung des Trägers 3 in einem Durchlauf möglich.

Bei einem erfindungsgemäßen Lagerteil 2 kann es sich - wie die in Fig. 2 dargestellte Ausführung zeigt - beispielsweise um eine mit dem erfindungsgemäßen Antifriktions-Verbundsystem 1 versehene Hülse handeln, die einen hohlzylindrischen Grundkörper 8 mit einem Flanschansatz 9 an einer Stirnseite und gegebenenfalls - wie dargestellt - mit einem Konusabschnitt 10 auf der anderen Stirnseite aufweist und die insbesondere zur Aufnahme einer rotierenden Welle bestimmt ist.

Das erfindungsgemäße Lagerteil 2 ist an der Innenwandung des zylindrischen Grundkörpers 8 und an der Stirnseite des Flanschansatzes 9 mit einem ununterbrochenen, konsistenten, erfindungsgemäßen Antifriktions-Verbundsystem 1 in einheitlicher Dicke t2 beschichtet. Dieser Dicke t2 entspricht in Fig. 1 die Dicke D4 der funktionellen Beschichtung 4.

Eine mittlere, aus der Dicke D3 des Trägers 3 und der Dicke t2/D4 der funktionellen Beschichtung 4 gebildete Gesamtdicke t1 kann dabei bevorzugt im Bereich von 0,2 mm bis 1,5 mm, insbesondere im Bereich von 0,5 mm bis 1,2 mm, liegen.

Die anderen in Fig. 2 dargestellten Hauptabmaße des erfindungsgemäßen Lagerteils 2, wie der Durchmesser D1 des Flanschansatzes 9, der Außendurchmesser D2 des zylindrischen Grundkörpers 8 und dessen mit dem Bezugszeichen H bezeichnete Länge, können dabei unter dem Aspekt der bevorzugt vorgesehenen Fertigungsweise entsprechend dem Grenzziehverhältnis des Werkstoffes des Trägers 3 ausgewählt werden.

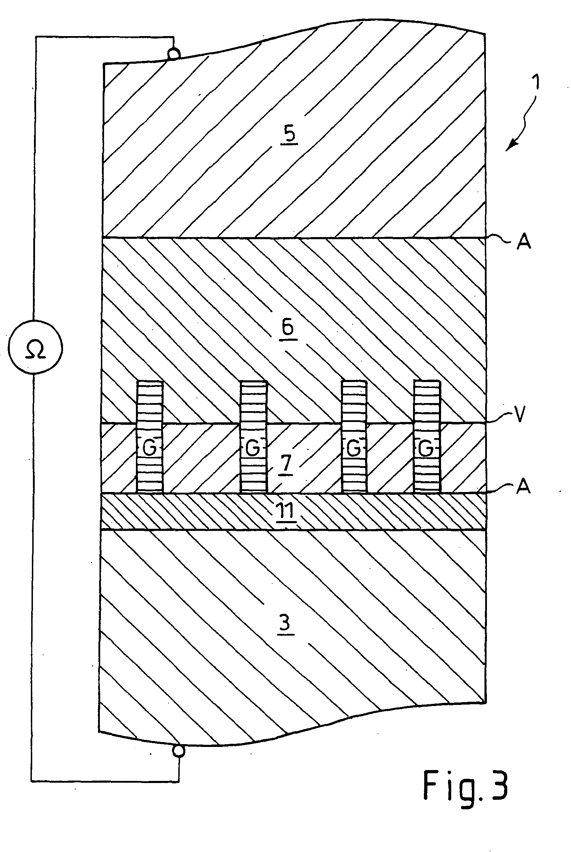

Wie bereits erwähnt, zeigt Fig. 3 in schematisierter Darstellung eine weitere Ausführung eines erfindungsgemäßen Antifriktions-Verbundsystems 1, mit seinem insbesondere metallischen Träger 3 und der darauf befindlichen funktionellen Beschichtung 4. Neben der Deckschicht 5, der Elastomerschicht 6 und der Haftvermittlungsschicht 7 ist dabei auf dem Träger 3 und unter der Haftvermittlungsschicht 7 - im Gegensatz zu der Ausführung in Fig. 1 - auch eine Passivierungsschicht 11 in der funktionellen Beschichtung 4 präsent. Die verschiedenen Schichtdicken sind nicht bezeichnet, können aber etwa dieselben Werte annehmen wie sie bei der Beschreibung des ersten Ausführungsbeispiels genannt wurden.

Für den Träger 3 kommen nahezu alle in Bandform lieferbaren Metalle, wie z. B. Aluminium, Stahl, Edelstahl, Edelstahl rostfrei, Kupfer, Messing usw., als Werkstoffe in Betracht.

Bei der Herstellung des erfindungsgemäßen Antifriktions-Verbundsystems 1 kann zunächst insbesondere eine Vorbehandlung des Trägers 3 vorgesehen sein, die ein Reinigen, Entfetten und - zur Bildung der Passivierungsschicht 11 ein Passivieren der Oberfläche umfaßt. Die Passivierung kann dabei - z. B. bei Eisenwerkstoffen - insbesondere ein Phosphatieren und - vor allem bei Aluminium - insbesondere ein Chromatieren umfassen. Sämtliche Vorbehandlungsprozesse können in einem Durchlauf des bevorzugt bandartigen Trägers 3 durch geeignete, an sich bekannte Behandlungsvorrichtungen dem eigentlichen Beschichtungsprozess vorgeschaltet sein.

Die Haftvermittlungsschicht 7 kann, wie auch die Elastomerschicht 6 und die Deckschicht 5, bevorzugt - wie bereits angedeutet - im Walzenauftragsverfahren mittels Dosierwalzen appliziert werden. Dadurch können die Schichtdicken mit großer Gleichmäßigkeit und Genauigkeit eingestellt werden. Der Festkörperanteil in dem zur Bildung der Haftvermittlungsschicht 7 einsetzbaren lösemittelhaltigen Naßlack beträgt dabei mit Vorteil 20 Ma.-% bis 40 Ma-%, insbesondere etwa 30 Ma.-%. Auf diese Weise können die Fließeigenschaften, vor allem die Viskosität des Lacks, auf einen Optimalwert eingestellt werden. Nach einer Trocknung verbleibt auf dem Band ein Trockenfilm mit einer Schichtdicke D7 von bevorzugt weniger als 5,0 µm. Zur Trocknung kann insbesondere ein Bandtrockner eingesetzt werden, der es bei vorteilhaft kontinuierlicher Betriebsweise gestattet, einen bestimmten, für die Lackbehandlung günstigen Temperaturgradienten einzustellen. Für eine hohe adhäsive Haftung, die in Fig. 3 durch den Punkt A am Übergang zwischen der Passivierungsschicht 11 und der Haftvermittlungsschicht 7 symbolisiert ist, können dabei mit Vorteil Phenolharze im Naßlack sorgen, deren Massenanteil in der getrockneten Haftvermittlungsschicht 7 bevorzugt kleiner ist als 2 %.

Der Trockenfilm der Haftvermittlungschicht 7 beinhaltet somit Polymere - optional Füllstoffe - sowie Vemetzungschemikalien, die bei der schonenden Trocknung noch nicht chemisch reagieren. Außerdem kann Graphit, vorzugsweise in hochreiner; gepulverter Form, "zulegiert" werden, was in Fig. 3 durch die mit dem Bezugszeichen G gekennzeichneten rechteckig dargestellten Bereiche veranschaulicht ist. Die mittlere Korngröße des Graphits G kann dabei vorzugsweise in einem Bereich von weniger als 50 µm liegen, wobei diese Korngröße dann deutlich größer - z. B. 5 bis 10 mal so groß - ist als im Trockenfilm der Haftvermittlungsschicht 7 vorhandene kömige Oberflächenstrukturen.

Die Partikel des Graphits G können dabei insbesondere aus der Haftvermittlungsschicht 7 heraus und in die Elastomerschicht 6 hinein ragen. Normalerweise bildet sich zwischen Haftvermittler und Elastomer eine den elektrischen Widerstand erhöhende Grenzschicht, durch die hindurch die Vernetzung der Polymere erfolgt. Die aus der Haftvermittlungsschicht 7 herausragenden Graphitpartikel G sorgen jedoch für eine erhöhte elektrische Leitfähigkeit in die Elastomerschicht 6 hinein. Die Bindung des Graphits G im Trockenfilm ist dabei so gut, daß die Oberfläche abriebfest ist, auch wenn das erfindungsgemäße Verbundsystem 1 gerollt wird. Die elektrische Leitfähigkeit ist entsprechend der vom erfindungsgemäßen Verbundsystem 1 zu erfüllenden Aufgabe über die Masseanteile an Graphit G steuerbar. Schon Masseanteile von deutlich weniger als 5 % reichen aus, um den spezifischen Oberflächenwiderstand (Messung nach DIN IEC 93, VDE 0303 T. 30, Sondenmessung) auf einen Wert zu minimieren, der der Multiplikation des Ursprungswertes mit einem Faktor 0,02 entspricht.

Der Gummi der Elastomerschicht 6 - vorgesehen für das System sind insbesondere NBR wegen seiner überragenden dauerelastischen Eigenschaften und gegebenenfalls FKM für Einsätze in flüssigen Medien - wird erfindungsgemäß als lösemittelhaltiger Naßlack, insbesondere aber in mehreren Durchgängen und Schichten, appliziert. Der Naßlack bzw. die Elastomerlösung kann dabei vorteilhafter Weise einen Festkörperanteil von weniger als 30 Ma-% aufweisen. Im Trockenfilm verbleiben dann nach schonender Trocknung - wiederum vorzugsweise im Bandtrockner - Polymere, Ruße, Graphit, Füllstoffe und Vernetzungschemikalien. Die Härte der vernetzten Schichten (gemessen in Shore A) läßt sich dabei über die Auswahl und Menge der Ruße steuern und der jeweiligen Aufgabenstellung anpassen. Eine elektrische Leitfähigkeit der Elastomerschicht 6 ist bei Vorhandensein von Rußen bereits gegeben, läßt sich aber über eine zusätzliche Zugabe von Graphit G gezielt steuern, d. h. weiter absenken. Dabei stören selbst hohe Mengen an Graphit G die Vulkanisationseigenschaften nicht in nennenswerter Weise und der Durchgangswiderstand (Messung DIN IEC 93, VDE 0303 T 30) der Elastomerschicht 6 kann quasi gegen Null gehen.

Die nach oder Applikation des Nasslacks aus mehreren Teilschichten bestehende Elastomerschicht 6 wird nach Erreichen der gewünschten Schichtdicke im letzten Durchgang in sich und mit der darunter liegenden Haftvermittlungsschicht 7 vernetzt. Dazu wird entsprechend den gewünschten physikalischen Eigenschaften ein Zeit-Temperatur-Fenster für die Trocknung vorgegeben, welches über die dadurch in Gang gesetzten Reaktionen - z. B. eine Vulkanisation über Schwefel-Brücken - eine partielle oder vollständige Vernetzung der gesamten Elastomerschicht 6 ermöglicht. Für die Vernetzung mit der darunter liegenden Haftvermittlungsschicht 7 steht in Fig. 3 dabei das Bezugszeichen V.

Erfindungsgemäß wird auch die reibungsmindernd wirkende Deckschicht 5, die bevorzugt Polytetrafluorethylen (PTFE) enthält, als Naßlackfilm appliziert werden. Auch hier können größere Trockenfilmschichtdicken (Schichtdicke D5) durch sukzessiven Auftrag und Trocknung mehrerer Naßlackfilme erzielt werden. Der Lack sollte dabei bevorzugt einen Festkörperanteil von mehr als 50 Ma-% aufweisen. Für die adhäsive Funktion - wiederum symbolisiert durch den Punkt A in Fig. 3 am Übergang der Elastomerschicht 6 zur Deckschicht 5 - kann bevorzugt ein PUR-Harz sorgen, dessen Anteil am Festkörper bevorzugt etwa 64 Ma.-% - oder mehr - beträgt, wobei der PTFE-Anteil etwa bei 27 Ma.-% - oder mehr - liegt.

Die elektrische Leitfähigkeit und die tribologischen Eigenschaften können auch in der Deckschicht 5 durch Inkorporation von Graphit G gesteuert werden, dessen Beschaffenheit insbesondere die gleiche sein kann, wie sie bei der Beschreibung der Haftvermittlungsschicht erwähnt wurde. Der Masseanteil am Festkörper kann dabei mit Vorteil größer sein als 30 %. Die elektrische Leitfähigkeit steigt dadurch signifikant an, was sich beispielsweise dadurch ausdrückt, dass der spezifische Durchgangswiderstand der Deckschicht 5 bei einem Anteil an Graphit G von etwa 25 % auf einen Bruchteil seines Ursprungswertes reduziert (Divisor etwa 10¹⁰).

Durch den erfindungsgemäßen Aufbau des Antifriktions-Verbundsystems 1 kann u.a. erreicht werden, dass die anwendungstechnisch äußerst vorteilhaften Eigenschaften des in der Deckschicht eingesetzten PTFE, wie hohe chemische und Temperaturbeständigkeit; niedrige Reibungszahl etc., in vollem Maß zum Tragen kommen können, während anwendungstechnisch gegebenenfalls negativ wirkende Eigenschaften, wie hoher Wärmeausdehnungskoeffizient und geringe Oberflächenhärte, in ihrer Wirkung kompensiert werden. In dem erfindungsgemäßen Antifriktions-Verbundsystems 1 werden vorteilhafter Weise die den technischen Gesamtsanforderungen entsprechenden Teilfunktionen in synergistischer Weise jeweils durch die Komponenten erfüllt, die für die jeweilige Teilfunktion die beste Eignung aufweisen - wie die Determinierung des Gleitverhaltens der Deckschicht 5 durch einen Fluorokarbon-Kunststoff oder die Einstellung von Dämpfung und Schwingungsentkopplung in der Elastomerschicht 6 durch den Gummi. Dabei sind die elektrischen Eigenschaften variierbar und können beispielsweise chargenweise verändert werden, was durch die eine Widerstandsmessung symbolisierende schaltkreisartige Andeutung eines Ohmmeters (Bezugszeichen Ω) in Fig. 3 veranschaulicht wird.

In diesem Zusammenhang wird auch festgestellt, dass das erfindungsgemäße Antifriktions-Verbundsystem 1 in seiner bevorzugten bandartigen Ausbildung abgekantet, insbesondere im kalten Zustand ge- bzw. verformt, wie tiefgezogen, oder auf andere Wiese bearbeitet, vorzugsweise gestanzt oder gelocht, werden kann, ohne dass eine Beschädigung oder Delaminierung der funktionellen Beschichtung 4 vom Träger 3 eintritt.

Trotz des Vorhandenseins einer nach einer Trennoperation unbeschichtet vorliegenden Schneidkante weist ein erfindungsgemäßes Antifriktions-Verbundsystem 1 eine höhere Korrosionsbeständigkeit auf als ein Metallband, welches erst nach seiner Verarbeitung beschichtet wurde, weil die genannte Schneidkante zwar nicht beschichtet ist, aber die Reinigung und Vorbehandlung des Trägers 3 mit durchlaufen hat.

Die Erfindung beschränkt sich nicht auf die vorstehenden Ausführungsbeispiele, sondern umfaßt auch alle gleichwirkenden Ausführungen gemäß den Ansprüchen. So ist es beispielsweise möglich, anstelle oder zusätzlich zu der beschriebenen Passivierungsschicht 11 auf die Oberfläche des Trägers 3 - zumindest teilweise - eine oder mehrere weitere, beispielsweise zink-, chrom- und/oder siliziumhaltige Funktionsschichten als antikorrosive und/oder Siegelschicht(en) aufzutragen.

Außerdem bestehen vielfältige weitere vorteilhafte Gestaltungsmöglichkeiten des erfindungsgemäßen Antifriktions-Verbundsystems 1 bzw. von unter dessen Verwendung hergestellten erfindungsgemäßen Lagerteilen - so beispielsweise, wie schon erwähnt, die einer beidseitigen Beschichtung des Trägers 3 mit der funktionellen Beschichtung 4.

### Bezugszeichen

- 1: Antifriktions-Verbundsystem
- 2: Lagerteil
- 3: Träger von 1
- 4: funktionelle Beschichtung von 1
- 5: Deckschicht von 4
- 6: Elastomerschicht von 4
- 7: Haftvermittlungsschicht von 4
- 8: Grundkörper von 2
- 9: Flanschansatz von 2
- 10: Konusabschnitt von 2
- 11: Passivierungsschicht

- A: Adhäsion
- D1: Durchmesser von 9
- D2: Außendurchmesser von 8
- D3: Dicke von 3
- D4: Dicke von 4
- D5: Dicke von 5
- D6: Dicke von 6
- D7: Dicke von 7
- G: Graphit
- H: Länge von 8
- t1: Dicke von 1
- t2: Dicke von 4, Fig. 2 (D4, in Fig. 1)
- V: Vernetzung von 6 und 7

- Ω: Widerstandsmeßgerät

## Patentansprüche

1. Antifriktions-Verbundsystem (1) für ein Lagerteil (2), wie eine Gleitlagerbuchse, mit einem metallischen Träger (3) und einer funktionellen Beschichtung (4), die eine reibungsmindernd wirkende Deckschicht (5) umfasst, wobei die funktionelle Beschichtung (4) eine unmittelbar unter der Deckschicht (5) liegende Elastomerschicht (6) aufweist,
**dadurch gekennzeichnet, dass** die reibungsmindernd wirkende Deckschicht (5) und die Elastomerschicht (6) Filmschichten sind, die jeweils durch Applikation und Trocknung eines lösungsmittelhaltigen Nasslacks gebildet sind und **dadurch** einen stoffschlüssigen Verbund bilden.

2. Verbundsystem (1) nach Anspruch 1,
**dadurch gekennzeichnet, dass** die Elastomerschicht (6) aus synthetischem Kautschuk, wie NBR, EPDM, HNBR, FPM, oder aus Naturkautschuk gefertigt ist.

3. Verbundsystem (1) nach Anspruch 1 oder 2,
**dadurch gekennzeichnet, dass** die Elastomerschicht (6) Polymere, Ruß, Graphit; Füllstoffe und/oder Vemetzungschemikalien enthält.

4. Verbundsystem (1) nach Anspruch 3,
**dadurch gekennzeichnet, dass** eine in Shore A gemessene Härte der Elastomerschicht (6) durch die Auswahl und Menge von in der Elastomerschicht (6) enthaltenem Ruß festgelegt ist.

5. Verbundsystem (1) nach einem der Ansprüche 1 bis 4,
**dadurch gekennzeichnet, dass** die Elastomerschicht (6) über eine Haftvermittlungsschicht (7) an den Träger (3) angebunden ist.

6. Verbundsystem (1) nach einem der Ansprüche 1 bis 5,
**dadurch gekennzeichnet, dass** die reibungsmindernd wirkende Deckschicht (5) eine einen Kunststoff oder ein Kunststoff-Compound enthaltende Schicht ist, die als einen Hauptbestandteil ein insbesondere fluorhaltiges Polymer, wie PTFE, umfasst.

7. Verbundsystem (1) nach einem der Ansprüche 5 oder 6,
**dadurch gekennzeichnet, dass** die Haftvermittlungsschicht (7) eine Filmschicht ist, die durch Applikation mittels Dosierwalzen und Trocknung mittels Bandtrockner eines lösungsmittelhaltigen Nasslacks gebildet ist.

8. Verbundsystem (1) nach Anspruch 7,
**dadurch gekennzeichnet, dass** ein Festkörperanteil in dem zur Bildung der Haftvermittlungsschicht (7) einsetzbaren lösemittelhaltigen Nasslack 20 Ma.-% bis 40 Ma-%, insbesondere etwa 30 Ma.-%, beträgt.

9. Verbundsystem (1) nach Anspruch 7 oder 8,
**dadurch gekennzeichnet, dass** der zur Bildung der Haftvermittlungsschicht (7) einsetzbare lösemittelhaltige Nasslack mindestens ein Phenolharz enthält.

10. Verbundsystem (1) nach Anspruch 9,
**dadurch gekennzeichnet, dass** ein Festkörperanteil des zur Bildung der Haftvermittlungsschicht (7) eingesetzten Phenolharzes in der Haftvermittlungsschicht (7) kleiner ist als 2 Ma.-%.

11. Verbundsystem (1) nach einem der Ansprüche 1 bis 10,
**dadurch gekennzeichnet, dass** ein Festkörperanteil in einem zur Bildung der Elastomerschicht (6) einsetzbaren lösemittelhaltigen Nasslack weniger als etwa 30 Ma.-% beträgt.

12. Verbundsystem (1) nach einem der Ansprüche 1 bis 11,
**dadurch gekennzeichnet, dass** der zur Bildung der Elastomerschicht (6) einsetzbare lösemittelhaltige Nasslack jeweils in mehreren Teilschichten aufgebracht und getrocknet ist.

13. Verbundsystem (1) nach einem der Ansprüche 5 bis 12,
**dadurch gekennzeichnet, dass** die zur Bildung der Elastomerschicht (6) und der Haftvermittlungsschicht (7) eingesetzten Werkstoffe in sich und untereinander, insbesondere thermisch, vorzugsweise über Schwefelbrücken, vernetzt sind.

14. Verbundsystem (1) nach einem der Ansprüche 1 bis 13,
**dadurch gekennzeichnet, dass** ein Festkörperanteil in einem zur Bildung der Deckschicht (5) einsetzbaren lösemittelhaltigen Nasslack mehr als etwa 50 Ma.-% beträgt.

15. Verbundsystem (1) nach einem der Ansprüche 1 bis 14,
**dadurch gekennzeichnet, dass** der zur Bildung der Deckschicht (5) einsetzbare lösemittelhaltige Nasslack mindestens ein PUR-Harz enthält.

16. Verbundsystem (1) nach Anspruch 15,
**dadurch gekennzeichnet, dass** ein Festkörperanteil des zur Bildung der Deckschicht (5) eingesetzten PUR-Harzes in der Deckschicht (5) etwa 64 Ma.-% - oder mehr - beträgt.

17. Verbundsystem (1) nach einem der Ansprüche 1 bis 16,
**dadurch gekennzeichnet, dass** die reibungsmindernd wirkende Deckschicht (5) und/oder die Elastomerschicht (6) elektrisch leitfähig ist/sind.

18. Verbundsystem (1) nach einem der Ansprüche 5 bis 17, **dadurch gekennzeichnet, dass** die Haftvermittlungsschicht (7) elektrisch leitfähig ist.

19. Verbundsystem (1) nach einem der Ansprüche 1 bis 18,
**dadurch gekennzeichnet, dass** die reibungsmindernd wirkende Deckschicht (5) und/oder die Elastomerschicht (6) Graphit (G), vorzugsweise mit einer mittleren Korngröße von weniger als 50 µm, enthält/enthalten.

20. Verbundsystem (1) nach einem der Ansprüche 5 bis 19, **dadurch gekennzeichnet, dass** die Haftvermittlungsschicht (7) Graphit (G), vorzugsweise mit einer mittleren Korngrösse von weniger als 50 µm, enthält.

21. Verbundsystem (1) nach Anspruch 19,
**dadurch gekennzeichnet, dass** ein Anteil an Graphit (G) in der Deckschicht (5) größer ist als 30 Ma.-%.

22. Verbundsystem (1) nach Anspruch 20,
**dadurch gekennzeichnet, dass** ein Anteil an Graphit (G) in der Haftvermittlungsschicht (7) kleiner ist als 5 Ma.-%.

23. Verbundsystem (1) nach einem der Ansprüche 20 bis 22,
**dadurch gekennzeichnet, dass** der Graphit (G) in Form von Partikeln vorliegt, die aus der Haftvermittlungsschicht (7) in die Elastomerschicht (6) hineinragen.

24. Verbundsystem (1) nach einem der Ansprüche 1 bis 23,
**dadurch gekennzeichnet, dass** auf die Oberfläche des Trägers (3) - zumindest teilweise - eine oder mehrere, beispielsweise zink-, chrom- und/- oder siliziumhaltige, Funktionsschichten als antikorrosive und/oder Siegelschicht(en) aufgetragen ist/sind, beispielsweise eine durch Phosphatieren gebildete Passivierungsschicht (11) auf einem eisenhaltigen Träger (3) oder eine durch Chromatieren gebildete Passivierungsschicht (11) auf einem aluminiumhaltigen Träger (3).

25. Verbundsystem (1) nach einem der Ansprüche 1 bis 24,
**dadurch gekennzeichnet, dass** die reibungsmindernd wirkende, insbesondere mit gleichmäßiger Dicke (D5) ausgebildete, Deckschicht (5) eine mittlere Dicke (D5) im Bereich von 2 µm bis 220 µm, insbesondere im Bereich von 30 µm bis 90 µm, aufweist.

26. Verbundsystem (1) nach einem der Ansprüche 1 bis 25,
**dadurch gekennzeichnet, dass** der metallische Träger (3) in Bandform vorliegt und insbesondere aus kaltgewalztem Bandstahl, vorzugsweise in den Qualitäten DC 01 bis DC 04 nach DIN EN 10 139, aus Fein- oder Feinstblech oder aus einem Edelstahl-, Aluminium- oder Buntmetallband besteht.

27. Verbundsystem (1) nach einem der Ansprüche 1 bis 26,
**dadurch gekennzeichnet, dass** eine mittlere, aus einer Dicke (D3) des Trägers (3) und einer Dicke (D4) der funktionellen Beschichtung (4) gebildete Gesamtdicke (t1) im Bereich von 0,2 mm bis 1,5 mm, insbesondere im Bereich von 0,5 mm bis 1,2 mm, liegt.

28. Verbundsystem (1) nach einem der Ansprüche 1 bis 27,
**dadurch gekennzeichnet, dass** die, insbesondere mit glatter Oberfläche ausgebildete, Elastomerschicht (6) eine mittlere Dicke (D6) im Bereich von 5 µm bis 120 µm, insbesondere im Bereich von 25 µm bis 50 µm, aufweist.

29. Verbundsystem (1) nach einem der Ansprüche 5 bis 28,
**dadurch gekennzeichnet, dass** die Haftvermittlungsschicht (7) eine mittlere Dicke (D7) im Bereich von 0,5 µm bis 5 µm, insbesondere im Bereich von 1,0 µm bis 2,0 µm, aufweist.

30. Verbundsystem (1) nach einem der Ansprüche 1 bis 29,
**dadurch gekennzeichnet, dass** die funktionelle Beschichtung (4) beidseitig auf den Träger (3) aufgetragen ist.

31. Verbundsystem (1) nach einem der Ansprüche 1 bis 30,
**gekennzeichnet durch** eine beschädigungsfreie Auf- und Abrollbarkeit zu bzw. von einer Rolle (Coil), die eine kontinuierliche Fertigung in einem Coil-Coating-Verfahren gestattet.

32. Lagerteil (2) mit einem Antifriktions-Verbundsystem (1) nach einem der Ansprüche 1 bis 31.

33. Lagerteil (2) nach Anspruch 32,
**gekennzeichnet durch** eine Ausbildung als Hülse, die einen hohlzylindrischen Grundkörper (8) mit einem Flanschansatz (9) an einer Stirnseite und gegebenenfalls mit einem Konusabschnitt (10) auf der anderen Stirnseite aufweist und insbesondere zur Aufnahme einer rotierenden Welle bestimmt ist.

34. Lagerteil (2) nach Anspruch 32 oder 33,
**dadurch gekennzeichnet, dass** die Wandung des hohlzylindrischen Grundkörpers (8) und des Flanschansatzes (9) aus dem metallischen Träger (3) gebildet und dass die Innenseite der Wandung sowie die Stirnseite des Flanschansatzes (9), vorzugsweise in einheitlicher Dicke (t2) und in ununterbrochener, konsistenter Weise, mit der funktionellen Beschichtung (4) beschichtet ist.

35. Lagerteil (2) nach einem der Ansprüche 32 bis 34,
**dadurch gekennzeichnet, dass** Hauptabmaße des Lagerteils (2), wie ein Durchmesser (D1) des Flanschansatzes (9) sowie ein Außendurchmesser (D2) und/oder eine Länge (H) des hohlzylindrischen Grundkörpers (8), entsprechend dem Grenzziehverhältnis des Werkstoffes des Trägers (3) dimensioniert sind.

## Claims

1. An anti-friction composite system (1) for a bearing part (2), such as a plain bearing bush, with a metallic support (3) and a functional coating (4) which comprises a friction-reducing top layer (5), the functional coating (4) having an elastomer layer (6) lying directly beneath the top layer (5),
**characterised in that** the friction-reducing top layer (5) and the elastomer layer (6) are film layers which are each formed by application and drying of a solvent-containing wet paint and thereby form a composite by a material bond.

2. A composite system (1) according to Claim 1,
**characterised in that** the elastomer layer (6) is made of synthetic rubber, such as NBR, EPDM, HNBR, FPM, or of natural rubber.

3. A composite system (1) according to Claim 1 or 2,
**characterised in that** the elastomer layer (6) contains polymers, soot, graphite, fillers and/or cross-linking chemicals.

4. A composite system (1) according to Claim 3,
**characterised in that** a hardness, measured in Shore A, of the elastomer layer (6) is established by the selection and amount of soot contained in the elastomer layer (6).

5. A composite system (1) according to one of Claims 1 to 4,
**characterised in that** the elastomer layer (6) is attached to the support (3) via an adhesion-promoting layer (7).

6. A composite system (1) according to one of Claims 1 to 5,
**characterised in that** the friction-reducing top layer (5) is a layer containing a plastics material or a plastics-material compound, which layer comprises as a main constituent an in particular fluorine-containing polymer, such as PTFE.

7. A composite system (1) according to one of Claims 5 or 6,
**characterised in that** the adhesion-promoting layer (7) is a film layer which is formed by application by means of metering rolls and drying by means of belt dryers of a solvent-containing wet paint.

8. A composite system (1) according to Claim 7,
**characterised in that** a solids content in the solvent-containing wet paint which can be used for the formation of the adhesion-promoting layer (7) is 20 mass % to 40 mass %, in particular about 30 mass %.

9. A composite system (1) according to Claim 7 or 8,
**characterised in that** the solvent-containing wet paint which can be used for the formation of the adhesion-promoting layer (7) contains at least one phenol resin.

10. A composite system (1) according to Claim 9,
**characterised in that** a solids content of the phenol resin used for the formation of the adhesion-promoting layer (7) in the adhesion-promoting layer (7) is less than 2 mass %.

11. A composite system (1) according to one of Claims 1 to 10,
**characterised in that** a solids content in a solvent-containing wet paint which can be used for the formation of the elastomer layer (6) is less than about 30 mass %.

12. A composite system (1) according to one of Claims 1 to 11,
**characterised in that** the solvent-containing wet paint which can be used for the formation of the elastomer layer (6) is applied in each case in a plurality of partial layers and is dried.

13. A composite system (1) according to one of Claims 5 to 12,
**characterised in that** the materials used for the formation of the elastomer layer (6) and the adhesion-promoting layer (7) are cross-linked in themselves and between themselves, in particular thermally, preferably via sulphur bridges.

14. A composite system (1) according to one of Claims 1 to 13,
**characterised in that** a solids content in a solvent-containing wet paint which can be used for the formation of the top layer (5) is more than about 50 mass %.

15. A composite system (1) according to one of Claims 1 to 14,
**characterised in that** the solvent-containing wet paint which can be used for the formation of the top layer (5) contains at least one polyurethane resin.

16. A composite system (1) according to Claim 15,
**characterised in that** a solids content of the polyurethane resin used for the formation of the top layer (5) in the top layer (5) is approximately 64 mass % - or more.

17. A composite system (1) according to one of Claims 1 to 16,
**characterised in that** the friction-reducing top layer (5) and/or the elastomer layer (6) is/are electrically conductive.

18. A composite system (1) according to one of Claims 5 to 17, **characterised in that** the adhesion-promoting layer (7) is electrically conductive.

19. A composite system (1) according to one of Claims 1 to 18,
**characterised in that** the friction-reducing top layer (5) and/or the elastomer layer (6) contain(s) graphite (G), preferably with an average grain size of less than 50 µm.

20. An composite system (1) according to one of Claims 5 to 19, **characterised in that** the adhesion-promoting layer (7) contains graphite (G), preferably with an average grain size of less than 50 µm.

21. A composite system (1) according to Claim 19,
**characterised in that** a proportion of graphite (G) in the top layer (5) is greater than 30 mass %.

22. A composite system (1) according to Claim 20,
**characterised in that** a proportion of graphite (G) in the adhesion-promoting layer (7) is less than 5 mass %.

23. A composite system (1) according to one of Claims 20 to 22,
**characterised in that** the graphite (G) is present in the form of particles which protrude out of the adhesion-promoting layer (7) into the elastomer layer (6).

24. A composite system (1) according to one of Claims 1 to 23,
**characterised in that** one or more for example zinc-, chromium- and/or silicon-containing functional layers is/are applied to the surface of the support (3) - at least partially - as anti-corrosive and/or sealing layer(s), for example a passivation layer (11) formed by phosphating on an iron-containing support (3) or a passivation layer (11) formed by chromating on an aluminium-containing support (3).

25. A composite system (1) according to one of Claims 1 to 24,
**characterised in that** the friction-reducing top layer (5), in particular formed with uniform thickness (D5), has an average thickness (D5) in the range of 2 µm to 220 µm, in particular in the range of 30 µm to 90 µm.

26. A composite system (1) according to one of Claims 1 to 25,
**characterised in that** the metallic support (3) is present in strip form and consists in particular of cold-rolled strip steel, preferably in the qualities DC 01 to DC 04 in accordance with DIN EN 10 139, of fine or very fine sheet metal or of a high-grade steel strip, aluminium strip or non-ferrous metal strip.

27. A composite system (1) according to one of Claims 1 to 26,
**characterised in that** an average overall thickness (t1) formed of a thickness (D3) of the support (3) and a thickness (D4) of the functional coating (4) lies in the range of 0.2 mm to 1.5 mm, in particular in the range of 0.5 mm to 1.2 mm.

28. A composite system (1) according to one of Claims 1 to 27,
**characterised in that** the elastomer layer (6), in particular formed with a smooth surface, has an average thickness (D6) in the range of 5 µm to 120 µm, in particular in the range of 25 µm to 50 µm.

29. A composite system (1) according to one of Claims 5 to 28,
**characterised in that** the adhesion-promoting layer (7) has an average thickness (D7) in the range of 0.5 µm to 5 µm, in particular in the range of 1.0 µm to 2.0 µm.

30. A composite system (1) according to one of Claims 1 to 29,
**characterised in that** the functional coating (4) is applied to the support (3) on both sides.

31. A composite system (1) according to one of Claims 1 to 30,
**characterised by** a damage-free ability to be rolled up and unrolled onto or from a roll (coil), which permits continuous production in a coil-coating process.

32. A bearing part (2) with an anti-friction composite system (1) according to one of Claims 1 to 31.

33. A bearing part (2) according to Claim 32,
**characterised by** a configuration as sleeve which has a hollow-cylindrical basic body (8) with a flange shoulder (9) on one end face and optionally with a cone section (10) on the other end face and is intended in particular to receive a rotating shaft.

34. A bearing part (2) according to Claim 32 or 33,
**characterised in that** the walls of the hollow-cylindrical basic body (8) and of the flange shoulder (9) are formed from the metallic support (3) and that the inside of the walls and also the end face of the flange shoulder (9) is coated with the functional coating (4), preferably in a uniform thickness (t2) and in an uninterrupted, consistent manner.

35. A bearing part (2) according to one of Claims 32 to 34,
**characterised in that** main dimensions of the bearing part (2), such as a diameter (D1) of the flange shoulder (9) and also an external diameter (D2) and/or a length (H) of the hollow-cylindrical basic body (8), are dimensioned corresponding to the limiting draw ratio of the material of the support (3).

## Revendications

1. Système composite antifriction (1) pour une pièce de palier (2) telle qu'un coussinet de palier lisse, avec un support métallique (3) et un revêtement fonctionnel (4) qui comprend une couche de couverture (5) à effet réducteur de friction, le revêtement fonctionnel (4) comprenant une couche d'élastomère (6) disposée directement en dessous de la couche de couverture (5),
**caractérisé en ce que** la couche de couverture (5) à effet réducteur de friction et la couche d'élastomère (6) sont des couches de film qui sont formées chacune par l'application et le séchage d'un vernis humide contenant un solvant et qui forment de ce fait un composite à continuité de matière.

2. Système composite (1) selon la revendication 1,
**caractérisé en ce que** la couche d'élastomère (6) est fabriquée en caoutchouc synthétique comme du NBR, du EPDM, du HNBR, du FPM, ou en caoutchouc naturel.

3. Système composite (1) selon la revendication 1 ou 2,
**caractérisé en ce que** la couche d'élastomère (6) contient des polymères, du noir de fumée, du graphite, des charges et/ou des produits chimiques de réticulation.

4. Système composite (1) selon la revendication 3,
**caractérisé en ce qu'**une dureté de la couche d'élastomère (6), mesurée en Shore A, est fixée par le choix et la quantité du noir de fumée contenu dans la couche d'élastomère (6).

5. Système composite (1) selon l'une quelconque des revendications 1 à 4,
**caractérisé en ce que** la couche d'élastomère (6) est reliée au support (3) par l'intermédiaire d'une couche de promoteur d'adhérence (7).

6. Système composite (1) selon l'une quelconque des revendications 1 à 5,
**caractérisé en ce que** la couche de couverture (5) à effet réducteur de friction est une couche contenant un plastique ou un composite de plastique qui comprend comme composant principal un polymère, en particulier un polymère fluoré comme le PTFE.

7. Système composite (1) selon l'une quelconque des revendications 5 ou 6,
**caractérisé en ce que** la couche de promoteur d'adhérence (7) est une couche de film qui est formée par application, au moyen de cylindres de dosage, et par séchage, au moyen d'un sécheur sur bande, d'un vernis humide contenant un solvant.

8. Système composite (1) selon la revendication 7,
**caractérisé en ce que** dans le vernis humide contenant un solvant pouvant être utilisé pour la formation de la couche de promoteur d'adhérence (7), une teneur en solide est de 20 % en masse à 40 % en masse, en particulier d'environ 30 % en masse.

9. Système composite (1) selon la revendication 7 ou 8,
**caractérisé en ce que** le vernis humide contenant un solvant pouvant être utilisé pour la formation de la couche de promoteur d'adhérence (7) contient au moins une résine phénolique.

10. Système composite (1) selon la revendication 9,
**caractérisé en ce que,** dans la couche de promoteur d'adhérence (7), une teneur en solide de la résine phénolique utilisée pour la formation de la couche de promoteur d'adhérence (7) est inférieure à 2 % en masse

11. Système composite (1) selon l'une quelconque des revendications 1 à 10,
**caractérisé en ce qu'**une teneur en solide dans un vernis humide contenant un solvant pouvant être utilisé pour la formation de la couche d'élastomère (6) est de moins de 30 % en masse.

12. Système composite (1) selon l'une quelconque des revendications 1 à 11,
**caractérisé en ce que** le vernis humide contenant un solvant pouvant être utilisé pour la formation de la couche d'élastomère (6) est appliqué et séché respectivement en plusieurs couches partielles.

13. Système composite (1) selon l'une quelconque des revendications 5 à 12,
**caractérisé en ce que** les matériaux utilisés pour la formation de la couche d'élastomère (6) et de la couche de promoteur d'adhérence (7) sont réticulés sur eux-mêmes et entre eux, en particulier thermiquement, de préférence par l'intermédiaire de ponts de soufre.

14. Système composite (1) selon l'une quelconque des revendications 1 à 13,
**caractérisé en ce qu'**une teneur en solide dans un vernis humide contenant un solvant pouvant être utilisé pour la formation de la couche de couverture (5) s'élève à plus 50 % en masse environ.

15. Système composite (1) selon l'une quelconque des revendications 1 à 14,
**caractérisé en ce que** le vernis humide contenant un solvant pouvant être utilisé pour la formation de la couche de couverture (5) contient au moins une résine de PUR.

16. Système composite (1) selon la revendication 15,
**caractérisé en ce qu'**une teneur en solide de la résine de PUR utilisée pour la formation de la couche de couverture (5) s'élève à environ 64 % en masse ou plus.

17. Système composite (1) selon l'une quelconque des revendications 1 à 16,
**caractérisé en ce que** la couche de couverture (5) à effet réducteur de friction et/ou la couche d'élastomère (6) est/sont électriquement conductrices.

18. Système composite (1) selon l'une quelconque des revendications 5 à 17,
**caractérisé en ce que** la couche de promoteur d'adhérence (7) est électriquement conductrice.

19. Système composite (1) selon l'une quelconque des revendications 1 à 18,
**caractérisé en ce que** la couche de couverture (5) à effet réducteur de friction et/ou la couche d'élastomère (6) contient/contiennent du graphite (G), de préférence avec une granulométrie moyenne de moins de 50 µm.

20. Système composite (1) selon l'une quelconque des revendications 5 à 19,
**caractérisé en ce que** la couche de promoteur d'adhérence (7) contient du graphite (G), de préférence avec une granulométrie moyenne de moins de 50 µm.

21. Système composite (1) selon la revendication 19,
**caractérisé en ce qu'**une teneur en graphite (G) dans la couche de couverture (5) est supérieure à 30 % en masse.

22. Système composite (1) selon la revendication 20,
**caractérisé en ce qu'**une proportion du graphite (G) dans la couche de promoteur d'adhérence (7) est inférieure à 5 % en masse.

23. Système composite (1) selon l'une quelconque des revendications 20 à 22,
**caractérisé en ce que** le graphite (G) se présente en forme de particules qui dépassent de la couche de promoteur d'adhérence (7) dans la couche d'élastomère (6).

24. Système composite (1) selon l'une quelconque des revendications 1 à 23,
**caractérisé en ce que** sur la surface du support (3), au moins en partie, une ou plusieurs couches fonctionnelles, contenant par exemple du zinc, du chrome et/ou du silicium, sont appliquées comme couche(s) anticorrosion et/ou comme couche(s) de scellement, par exemple une couche de passivation (11) formée par phosphatation sur un support (3) contenant du fer ou une couche de passivation (11) formée par chromatation sur un support (3) contenant de l'aluminium.

25. Système composite (1) selon l'une quelconque des revendications 1 à 24,
**caractérisé en ce que** la couche de couverture (5) à effet réducteur de friction, en particulier formée avec une épaisseur (D5) uniforme, présente une épaisseur moyenne (D5) dans l'intervalle de 2 µm à 220 µm, en particulier dans l'intervalle de 30 µm à 90 µm.

26. Système composite (1) selon l'une quelconque des revendications 1 à 25,
**caractérisé en ce que** le support métallique (3) se présente en forme de bande et consiste en particulier en une bande d'acier laminée à froid, de préférence dans les qualités DC 01 à DC 04 selon DIN EN 10 139, en une tôle fine ou ultrafine, ou en une bande d'acier inoxydable, d'aluminium ou de métaux non-ferreux.

27. Système composite (1) selon l'une quelconque des revendications 1 à 26,
**caractérisé en ce qu'**une épaisseur moyenne totale (t1), formée d'une épaisseur (D3) du support (3) et une épaisseur (D4) du revêtement fonctionnel (4), est comprise dans l'intervalle de 0,2 mm à 1,5 mm, en particulier dans l'intervalle de 0,5 mm à 1,2 mm.

28. Système composite (1) selon l'une quelconque des revendications 1 à 27,
**caractérisé en ce que** la couche d'élastomère (6) formée en particulier avec une surface lisse, présente une épaisseur (D6) moyenne dans l'intervalle de 5 µm à 120 µm, en particulier dans l'intervalle de 25 µm à 50 µm.

29. Système composite (1) selon l'une quelconque des revendications 1 à 28,
**caractérisé en ce que** la couche de promoteur d'adhérence (7) présente une épaisseur (D7) moyenne dans l'intervalle de 0,5 µm à 5 µm, en particulier dans l'intervalle de 1,0 µm à 2,0 µm.

30. Système composite (1) selon l'une quelconque des revendications 1 à 29,
**caractérisé en ce que** le revêtement fonctionnel (4) est appliqué sur le support (3) des deux côtés.

31. Système composite (1) selon l'une quelconque des revendications 1 à 30,
**caractérisé par** une aptitude à être enroulé sans endommagement sur une bobine (coil), respectivement à en être déroulé, qui autorise une fabrication en continu dans un procédé de revêtement de bobine (coil coating).

32. Pièce de palier (2) avec un système composite antifriction (1) selon l'une quelconque des revendications 1 à 31.

33. Pièce de palier (2) selon la revendication 32,
**caractérisée par** une configuration comme douille qui comporte un corps de base (8) cylindrique creux avec un rebord en bride (9) sur une face frontale et, le cas échéant, avec un tronçon conique (10) sur l'autre face frontale, et qui est destinée en particulier à la réception d'un arbre tournant.

34. Pièce de palier (2) selon la revendication 32 ou 33,
**caractérisée en ce que** la paroi du corps de base (8) cylindrique creux et du rebord en bride (9) est formée en le support métallique (3) et **en ce que** la face intérieure de la paroi, ainsi que la face frontale du rebord en bride (9), sont revêtues de façon ininterrompue systématique, de préférence en une épaisseur (t2) uniforme, du revêtement fonctionnel (4).

35. Pièce de palier (2) selon l'une quelconque des revendications 32 à 34,
**caractérisée en ce que** les cotes hors tout de la pièce de palier (2), comme un diamètre (D1) du rebord en bride (9) ainsi qu'un diamètre extérieur (D2) et/ou une longueur (H) du corps cylindrique creux de base (8) sont dimensionnées en fonction du rapport limite d'emboutissage du matériau du support (3).
